# EUROPÄISCHE PATENTSCHRIFT

(11) **EP 0 727 599 B1**
(45) Veröffentlichungstag und Bekanntmachung des Hinweises auf die Patenterteilung: **23.02.2000**
(21) Anmeldenummer: 95118587.5
(22) Anmeldetag: 25.11.1995
(51) Int. Cl.: F16H 63/18

(54) **Schaltvorrichtung für ein Schaltgetriebe**
Shift device for a gearbox
Dispositif de changement de vitesse pour transmission

(30) Priorität: 17.02.1995 DE 19505320
(43) Veröffentlichungstag der Anmeldung: 21.08.1996
(73) Patentinhaber: Dr.Ing.h.c. F. Porsche Aktiengesellschaft, 70435 Stuttgart (DE)
(72) Erfinder: Kraxner, Dieter, D-75449 Wurmberg (DE)

(56) Entgegenhaltungen:
- DE-A- 1 405 916
- DE-A- 4 205 671
- US-A- 1 500 878

## Beschreibung

Die Erfindung geht aus von einer Schaltvorrichtung für ein Schaltgetriebe nach der Gattung des Hauptanspruches.

Aus der DE 42 05 671 A1 ist ein Schaltgetriebe bekannt, bei dem einzelne Getriebegänge durch das Zusammenwirken mehrerer Zahnradpaare (Gruppenschaltung) geschaltet werden. Für das Schalten eines Ganges ist dabei das Ausführen zweier Synchronisiervorgänge erforderlich. Die beiden Synchronisiervorgänge können dabei nacheinander (in Reihe) oder gleichzeitig (parallel) ausgeführt werden. Die Betätigung der beiden Synchronisiervorgänge nacheinander hat den Nachteil, daß bei bestimmten Schaltvorgängen ein großer Stufensprung im ersten Schritt synchronisiert werden muß. Im darauffolgenden Schritt müssen dann die Drehzahlen in umgekehrter Richtung verändert werden. Weiterhin verschlechtern sich bei nacheinander durchgeführten Synchronisiervorgängen die Kraftverhältnisse am Schalthebel durch den insgesamt nahezu verdoppelten Weg zum Einlegen eines Ganges. Diese Nachteile werden durch gleichzeitiges Ausführen der beiden Synchronisiervorgänge vermieden.

Aus der EP 0 547 007 A1 ist eine Schaltvorrichtung bekannt, bei der die Schaltelemente (Synchronisierkupplungen) eines Schaltgetriebes über Schaltgabeln bewegt werden, die wiederum von einer rotatorisch bewegten Schaltwalze verschoben werden. Dazu wird ein Führungsarm der Schaltgabel in einer Führungsbahn der Schaltwalze bewegt. Durch Zusammenwirken des Führungsarmes und der Führungsbahn wird die rotatorische Bewegung der Schaltwalze in eine axiale Verschiebung der Schaltgabel überführt. Bei einer derartigen Schaltvorrichtung werden zwar mehrere Schaltgabeln des Schaltgetriebes in nebeneinander verlaufenden Führungsbahnen der Schaltwalze geführt und von diesen bewegt, ein gleichzeitiges Bewegen zweier Schaltgabeln und damit zweier Synchronisierkupplungen ist nicht ohne weiteres möglich. Da aufgrund von Bauteil- und Fertigungstoleranzen die Betätigungswege der Synchronisierkupplungen bzw. Schaltgabeln nicht vollkommen gleich sind, kann es vorkommen, daß eine Synchronisierkupplung bereits vollständig eingelegt ist, während die andere noch nicht den gesamten Betätigungsweg zurückgelegt hat. Aufgrund der für eine exakte Betätigung notwendigen engen Führung der Führungsarme in den Führungsbahnen ist ein Toleranzausgleich nicht möglich.

Der Erfindung liegt demgegenüber die Aufgabe zugrunde, eine Schaltbetätigung für ein Schaltgetriebe auszubilden, bei dem zum Schalten wenigstens eines Getriebeganges zwei Schaltelemente (Synchronisierkupplungen) gleichzeitig bewegt werden müssen. Der Schaltvorgang soll dabei sicher durchgeführt werden, wobei die aufgrund von Bauteil- und Fertigungstoleranzen auftretenden Wegunterschiede bei der Betätigung der einzelnen Schaltelemente ausgeglichen werden sollen. Gleichzeitig sollen die Schaltkräfte der beiden Synchronisiervorgänge in einem bestimmten Verhältnis entsprechend den zu überbrückenden Differenzdrehzahlen, Massenträgheitsmomenten und Synchrondurchmessern zueinander stehen, so daß eine gleichmäßige Annäherung der Drehzahlen erfolgen kann.

Diese Aufgabe wird erfindungsgemäß mit den kennzeichnenden Merkmalen des Hauptanspruches gelöst. Durch Unterbringung der Schaltbahnen auf mindestens zwei separaten Rotorelementen, zwischen denen ein Ausgleichselement angeordnet ist, ist eine ausreichende Trennung der beiden Einzelschaltvorgänge möglich, da die starre Kopplung der zu bewegenden Schaltelemente entfällt. Durch das Ausgleichselement zwischen den beiden separaten Rotorelementen ist ein Wegausgleich möglich, der die unterschiedlichen Betätigungswege der beiden Schaltelemente ausgleicht. Damit wird ein schneller, manuell durchführbarer Schaltvorgang bei kurzem Betätigungsweg am Schalthebel, mit relativ geringen Betätigungskräften und niedriger Synchronisierarbeit ermöglicht.

In vorteilhafter Weise ist das Ausgangselement nach dem Prinzip des wegausgleichenden Waagebalkens aufgebaut. Dieses Prinzip wird in ähnlicher Form z.B. bei Bremsanlagen verwendet, bei denen zwei voneinander getrennte Bremskreise mit definierter Bremskraftverteilung und unterschiedlichen Leerhüben betätigt werden können. Mit einem Ausgleichselement nach diesem Prinzip ist entsprechend eine definierte Schaltkraftverteilung bei unterschiedlichen Schaltwegen möglich.

Dieses Ausgleichselement kann in vorteilhafter Weise aus zwei gekoppelten Betätigungsrampen bestehen, von denen jede mit einem der separaten Rotorelemente zusammenwirkt, und zwischen denen ein Federelement angeordnet ist.

Die Rotorelemente und das Ausgleichselement werden in vorteilhafter, platzsparender Weise auf einer gemeinsamen, die Drehbewegung einleitenden Schaltwelle angeordnet. Durch diesen koaxialen Aufbau ergibt sich ein kompakter, raumsparender Aufbau der Schaltvorrichtung.

Weitere Vorteile und vorteilhafte Weiterbildungen der Erfindung ergeben sich aus den Unteransprüchen und der Beschreibung. Ein Ausführungsbeispiel der Erfindung ist in der nachfolgenden Beschreibung und Zeichnung näher erläutert. Letztere zeigt in
- Fig. 1: eine schematische Darstellung eines Schaltgetriebes,
- Fig. 2: das Schaltschema des in Fig. 1 dargestellten Schaltgetriebes,
- Fig. 3: einen nur teilweise dargestellten Längsschnitt durch die Schaltvorrichtung,
- Fig. 4: eine Abwicklung von Teilen der Schaltvorrichtung.

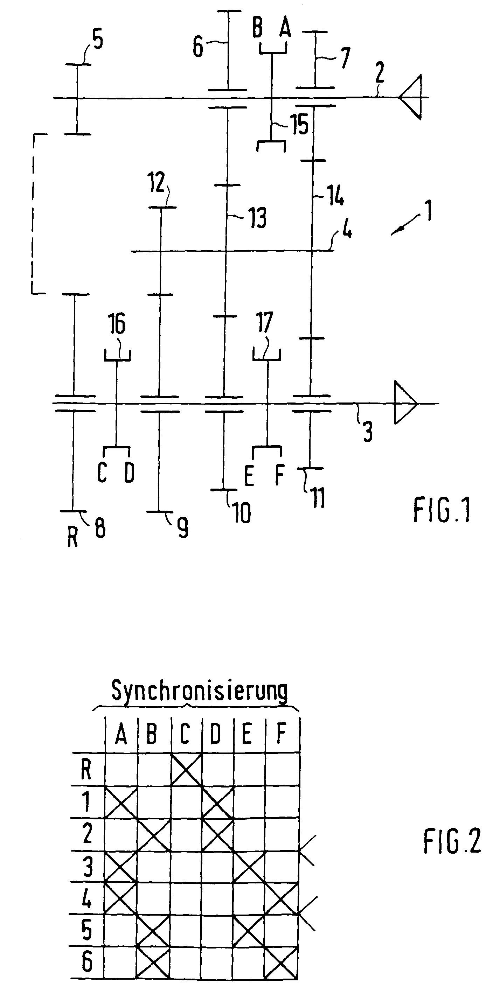

Das in Fig. 1 beispielhaft dargestellte Schaltgetriebe 1 hat eine Eingangswelle 2, eine Ausgangswelle 3 und eine Zwischenwelle 4. Auf der Eingangswelle 2 ist ein Zahnrad 5 fest angebracht, zwei weitere Zahnräder 6 und 7 sind als Losräder geführt. Auf der Ausgangswelle 3 sind vier weitere Zahnräder 8 bis 11 als Losräder gelagert. Das Zahnrad 8 steht dabei mit dem Zahnrad 5 der Eingangswelle im Eingriff. Das Zahnrad 9 kämmt mit einem fest auf der Zwischenwelle 4 befestigten Zahnrad 12. Auf dieser Zwischenwelle 4 sind zwei weitere Zahnräder 13 und 14 befestigt, von denen das Zahnrad 13 einerseits mit dem Zahnrad 10 der Ausgangswelle 3 und andererseits mit dem Zahnrad 6 der Eingangswelle 2 in Eingriff steht. Das Zahnrad 14 steht einerseits mit dem Zahnrad 11 der Ausgangswelle 3 und andererseits mit dem Zahnrad 7 der Eingangswelle 2 im Eingriff.

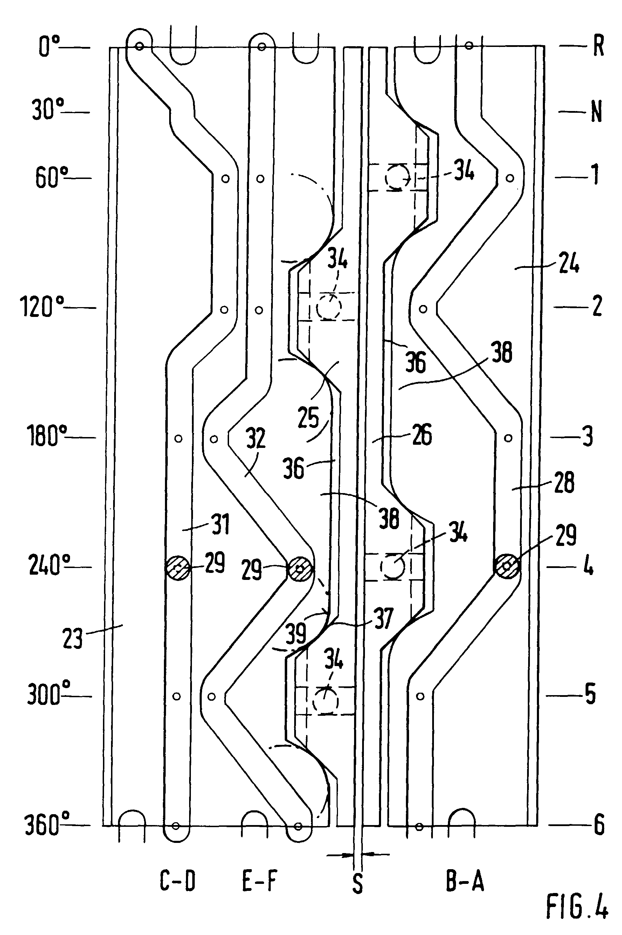

Zwischen den Zahnrädern 6 und 7 ist auf der Eingangswelle 2 eine Synchronisierkupplung 15 drehfest geführt, die einerseits mit dem Zahnrad 6 (Synchronisierung B) und andererseits mit dem Zahnrad 7 (Synchronisierung A) auf an sich bekannte Weise zusammenwirkt. Zwei weitere Synchronisierkupplungen 16 und 17 sind auf der Ausgangswelle 3 drehfest geführt. Die zweite Synchronisierkupplung 16 wirkt einerseits mit dem Zahnrad 8 (Synchronisierung C) und andererseits mit dem Zahnrad 9 (Synchronisierung D) zusammen. Die dritte Synchronisierungskupplung 17 wirkt einerseits mit dem Zahnrad 10 (Synchronisierung E) und andererseits mit dem Zahnrad 11 (Synchronisierung F) zusammen. Das Schaltschema zur Betätigung der sechs Vorwärtsgänge 1 bis 6 und des Rückwärtsganges R ist aus Fig. 2 und Fig. 4 (rechte Randbeschriftung) ersichtlich. Die sechs Vorwärtsgänge werden dabei durch Betätigen jeweils zweier Synchronisierkupplungen geschaltet. Jede der drei Synchronisierkupplungen 15 bis 17 ist als doppelt wirkende Synchronisierkupplung mit einer linken und rechten Arbeitsstellung und einer mittleren Neutralstellung ausgebildet. Anstelle des geschilderten Getriebeaufbaus ist auch jede andere Getriebebauart bzw. Getriebebauform ohne weiteres möglich, sofern mindestens ein Getriebegang durch das Betätigen zweier Synchronisierkupplungen eingelegt wird.

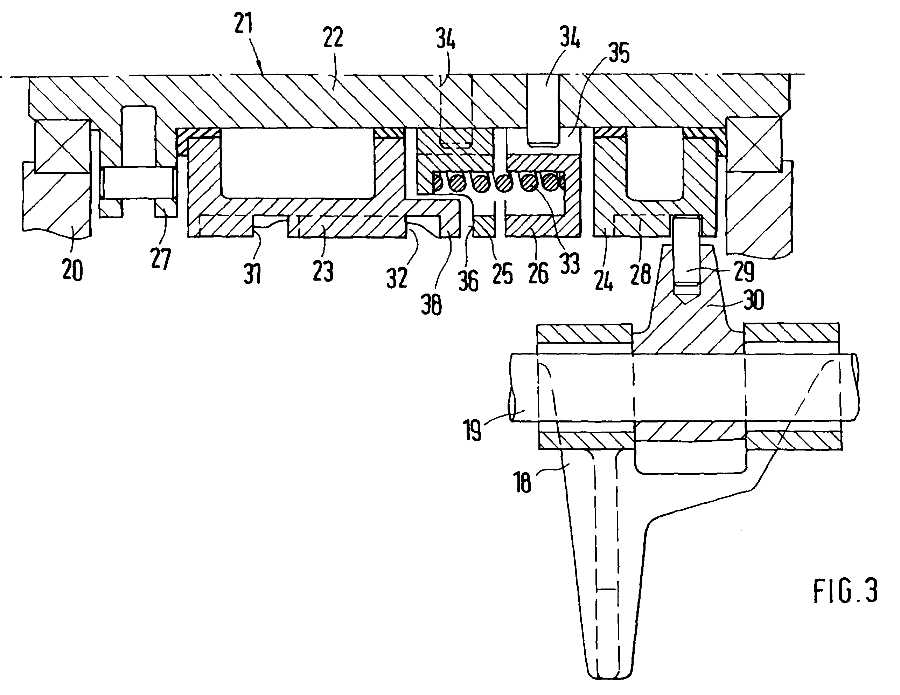

Zum Einlegen bzw. Herausnehmen der einzelnen Getriebegänge werden die Synchronisierkupplungen 15 bis 17 achsparallel zu den jeweils führenden Wellen 2, 3 bewegt. Das axiale Verschieben der Synchronisierkupplungen 15 bis 17 erfolgt in diesem Ausführungsbeispiel durch Schaltgabeln 18, von denen in Fig. 3 der besseren Übersicht halber nur eine einzige dargestellt ist. Die Schaltgabeln 18 sind auf Schaltstangen 19 befestigt, die im Gehäuse 20 des Schaltgetriebes 1 gelagert sind. Die axiale Verschiebung der Schaltstangen 19 erfolgt durch Verdrehen der Schaltvorrichtung 21, die im wesentlichen aus einer Schaltwelle 22, zwei Rotorelementen 23, 24 und zwei ringförmigen Betätigungsrampen 25 und 26 besteht. Die Schaltwelle 22 ist drehbar im Gehäuse 20 des Schaltgetriebes 1 gelagert und wird durch ein an sich bekanntes Schrittschaltwerk verdreht, von dem hier nur der fest mit der Schaltwelle 22 verbundene Mitnehmerkranz 27 dargestellt ist. Die Verdrehung der Schaltwelle 22 kann ohne weiteres auch mit Servounterstützung oder automatisiert erfolgen. Auf der Schaltwelle 22 sind die beiden Rotorelemente 23, 24 mit Abstand zueinander drehbar aber axial fest gelagert. Das (in Fig. 3) rechte Rotorelement 24 hat an seinem Außenumfang eine eingelassene Führungsbahn 28, in die ein Führungsstift 29 eingreift, der mit einem Schaltfinger 30 der Schaltstange 19 verbunden ist. Durch die Führungsbahn 28 des rechten Rotorelementes 24 wird in Zusammenwirkung mit dem Führungsstift 29 und der Schaltstange 19 die Synchronisierkupplung 15 (Synchronisierungen A, B) bewegt. Am Außenumfang des linken Rotorelementes 23 sind zwei weitere beabstandete Führungsbahnen 31, 32 ausgebildet, von denen die linke Führungsbahn 31 mit der Synchronisierkupplung 16 (Synchronisierungen C, D) und die rechte Führungsbahn 32 mit der Synchronisierkupplung 17 (Synchronisierungen E, F) zusammenwirkt.

Zwischen den beiden Rotorelementen 23, 24 sind die beiden ringförmigen Führungsrampen 25, 26 drehfest aber axial verschieblich auf der Schaltwelle 22 gelagert. Die beiden Führungsrampen 25, 26 haben jeweils einen etwa U-förmigen Querschnitt, deren offene Seiten einander zugewandt sind. Zwischen den beiden Führungsrampen 25, 26 ist ein die Schaltwelle 22 umfassendes Federelement 33 geführt, das sich jeweils mit einer seiner Stirnseiten an einer der Führungsrampen 25, 26 abstützt. Die Drehbewegung der Schaltwelle 21 wird über Radialstifte 34 auf die beiden Führungsrampen 25, 26 übertragen, die dazu jeweils eine axial verlaufende Nut 35 in ihrem inneren Umfang aufweisen.

Die linke Führungsrampe 25 hat an ihrem äußeren Umfang zwei um etwa 180° versetzte Ausnehmungen 36, deren Seitenflächen 37 als Keilflächen ausgebildet sind und unter einem Winkel von etwa 45 ° verlaufen. In diese Ausnehmungen 36 greifen Vorsprünge 38 am Außenumfang des linken Rotorelementes 23, deren Seitenflächen 39 bogenförmig gekrümmt sind und an den keilförmigen Seitenflächen 37 der Betätigungsrampe 25 anliegen. Die einander zugewandten Stirnseiten der rechten Betätigungsrampe 26 und des rechten Rotorelementes 24 sind in analoger Weise ebenfalls mit Vorsprüngen 38 bzw. Ausnehmungen 36 versehen, deren Seitenflächen ebenfalls keilförmig bzw. bogenförmig ausgebildet sind und aneinander anliegen. Durch die Wirkung des Federelementes 33 werden die beiden Betätigungsrampen 24, 25 jeweils so nach außen gedrückt, daß die Seitenflächen 37, 39 aneinander anliegen und sich ein Abstand S zwischen den beiden Betätigungsrampen einstellt. Die Abmessungen der Ausnehmungen 36 und Vorsprünge 38 sowie der Seitenflächen 37, 39 sind so aufeinander abgestimmt, daß zwischen den Stirnseiten einander zugewandten der Rotorelemente und der Betätigungsrampen auch bei (punktuellem) Anliegen mehrerer Seitenflächen ein geringer Abstand verbleibt.

Beim Verdrehen der Schaltwelle 22 werden die Betätigungsrampen 25, 26 über die Radialstifte 34 und die Nuten 35 ebenfalls verdreht. Durch die Reaktionskräfte der mit den Führungsbahnen 29, 31, 32 zusammenwirkenden Synchronisierkupplungen und das Zusammenwirken der jeweils aneinander liegenden Seitenflächen 37 und 39 werden die beiden Betätigungsrampen 25 und 26 gegen die Wirkung des Federelementes 33 relativ aufeinander zu bewegt, bis die einander zugewandten Stirnseiten aneinander anliegen. Durch das Zusammenwirken jeweils einer geraden Stirnfläche und einer bogenförmig gekrümmten Seitenfläche sind axiale Gleitbewegungen zwischen der jeweils im Eingriff befindlichen Betätigungsrampe und des zugeordneten Rotorelementes möglich. Diese führen zu einer relativen Verdrehung der zusammenwirkenden Bauelemente. In beide Betätigungsrichtungen der Schaltwelle 22 ist somit ein axiales Ausweichen der Betätigungsrampe und somit ein Ausgleich unterschiedlicher Betätigungswege und Betätigungskräfte an den einzelnen Synchronisierkupplungen möglich.

Ist bei einem Schaltvorgang beispielsweise die mit dem linken Rotorelement 23 zusammenwirkende Synchronisierkupplung bereits in ihre Endstellung verschoben und die mit dem rechten Rotorelement 24 zusammenwirkende Synchronisierkupplung noch nicht vollständig durchgeschaltet, wird aufgrund der bei weiterem Verdrehen stark ansteigenden Kraft die linke Betätigungsrampe 25 nach rechts verschoben. Die stirnseitig anliegende rechte Betätigungsrampe 26 wird dabei mit dem rechten Rotorelement 24 aufgrund des Zusammenwirkens der bogenförmigen und keilförmigen Stirnseiten solange weiter verdreht, bis auch die mit diesem Rotorelement zusammenwirkende Synchronisierkupplung in ihre Endstellung verschoben ist. Analog erfolgt ein Ausgleich der unterschiedlichen Betätigungswege, wenn die mit dem rechten Rotorelement 24 zusammenwirkende Synchronisierung zuerst in ihre Endstellung verschoben ist.

## Patentansprüche

1. Schaltvorrichtung zur Betätigung von Schaltelementen (15,16,17) eines Schaltgetriebes mit
- mindestens zwei Schaltelementen (15,16,17), die zwei Getriebewellen (2,3) zugeordnet und zum Schalten von Getriebegängen entlang dieser Wellen axial verschiebbar sind, wobei mindestens ein Getriebegang durch gleichzeitiges Betätigen der zwei Schaltelemente eingelegt oder gelöst wird, und mit
- einem drehbaren Schaltrotor (23,24), der mindestens zwei Schaltbahnen (32,28) aufweist, welche mit Übertragungsmitteln (29,30) zur Umsetzung der Drehbewegung des Schaltrotors in eine translatorische Bewegung der beiden Schaltelemente zusammenwirken, **gekennzeichnet durch folgende weitere Merkmale**:
- die zwei Getriebewellen (2,3) sind parallel zueinander angeordnet,
- der Schaltrotor besteht aus zwei separaten drehbaren Rotorelementen (23,24), auf denen die mindestens zwei Schaltbahnen ausgebildet sind, und
- ein Ausgleichselement (25,26,33) ist zwischen den beiden Rotorelementen (23 und 24) angeordnet.

2. Schaltvorrichtung nach Anspruch 1, dadurch gekennzeichnet, daß das Ausgleichselement (25,26,33) nach dem Prinzip des wegausgleichenden Waagebalkens aufgebaut ist.

3. Schaltvorrichtung nach Anspruch 1 oder 2, dadurch gekennzeichnet, daß das Ausgleichselement aus zwei gekoppelten Betätigungsrampen (25, 26), die mit jeweils einem Rotorelement (23,24) zusammenwirken, und einem zwischengeschalteten Federelement (33) besteht.

4. Schaltvorrichtung nach einem der vorangehenden Ansprüche, dadurch gekennzeichnet, daß das Ausgleichselement (25,26,33) und die Rotorelemente (23,24) auf einer die Drehbewegung einleitenden Schaltwelle (22) angeordnet sind.

5. Schaltvorrichtung nach Anspruch 3 und 4, dadurch gekennzeichnet, daß
- die Betätigungsrampen (25,26) drehfest aber axial verschieblich auf der Schaltwelle (22) angeordnet sind und
- die Rotorelemente (23,24) axial fest auf der Schaltwelle (22) angeordnet sind.

6. Schaltvorrichtung nach einem der vorangehenden Ansprüche, dadurch gekennzeichnet, daß jeweils eine Betätigungsrampe (25,26) und ein Rotorelement (23,24) über mindestens eine Keilfläche (37) zusammenwirken.

7. Schaltvorrichtung nach Anspruch 6, dadurch gekennzeichnet, daß die mindestens eine Keilfläche (37) jeweils mit einer Bogenfläche (39) zusammenwirkt.

## Claims

1. A gear-shifting device for actuating gear-shifting members (15, 16, 17) of a gearbox, with
- at least two gear-shifting members (15, 16, 17) associated with two gearbox shafts (2, 3) and axially displaceable along the said shafts in order to shift gears, wherein at least one gear is engaged or released by simultaneous actuation of the two gear-shifting members, and with
- a rotatable gear-shifting rotor (23, 24) provided with at least two gear-shifting paths (32, 28) cooperating with transmission means (29, 30) for converting the rotary movement of the gear-shifting rotor into a translatory movement of the two gear-shifting members, **characterized by the following further features**:
- the two gearbox shafts (2, 3) are arranged parallel to each other,
- the gear-shifting rotor comprises two separate rotatable rotor members (23, 24) on which the at least two gear-shifting paths are formed, and
- a compensating member (25, 26, 33) is arranged between the two rotor members (23 and 24).

2. A gear-shifting device according to Claim 1, **characterized in that** the compensating member (25, 26, 33) is designed in accordance with the principle of a path-compensating balance arm.

3. A gear-shifting device according to Claim 1 or 2, **characterized in that** the compensating member comprises two coupled actuating ramps (25, 26), each cooperating with a respective rotor member (23, 24), and an interposed spring member (33).

4. A gear-shifting device according to one of the preceding Claims, **characterized in that** the compensating member (25, 26, 33) and the rotor members (23, 24) are mounted on a gear-shift shaft (22) initiating the rotary movement.

5. A gear-shifting device according to Claims 3 and 4, **characterized in that**
- the actuating ramps (25, 26) are arranged rotationally fixed but axially displaceably on the gear-shift shaft (22), and
- the rotor members (23, 24) are arranged axially fixed on the gear-shift shaft (22).

6. A gear-shifting device according to one of the preceding Claims, **characterized in that** one respective actuating ramp (25, 26) and a rotor member (23, 24) cooperate by way of at least one wedge face (37).

7. A gear-shifting device according to Claim 6, **characterized in that** the at least one wedge face (37) cooperates with one respective curved face (39).

## Revendications

1. Dispositif de changement de vitesse pour l'actionnement d'éléments de commutation (15, 16, 17) d'une boîte de vitesses comportant
- au moins deux éléments de commutation (15, 16, 17) qui sont associés à deux arbres de transmission (2, 3) et qui peuvent coulisser axialement le long de ces arbres, pour le changement des rapports de la boîte de vitesses, un rapport au moins étant enclenché ou supprimé par actionnement simultané des deux éléments de commutation, et comportant
- un rotor de commande (23, 24) tournant qui comporte au moins deux pistes de commutation (32, 28), lesquelles coopèrent avec des moyens de transmission (29, 30) pour la conversion du mouvement de rotation du rotor de commande en un mouvement de translation des deux éléments de commutation, caractérisé par les autres caractéristiques suivantes:
- les deux arbres de transmission (2, 3) sont disposés parallèlement l'un à l'autre,
- le rotor de commande est constitué de deux éléments de rotor (23, 24) tournants et séparés sur lesquels sont formées les voies de commutation au moins au nombre de deux, et
- un élément de compensation (25, 26, 33) est disposé entre les deux éléments de rotor (23 et 24).

2. Dispositif de changement de vitesse selon la revendication 1, caractérisé en ce que l'élément de compensation (25, 26, 33) est constitué suivant le principe du fléau d'une balance qui compense la distance.

3. Dispositif de changement de vitesse selon la revendication 1 ou 2, caractérisé en ce que l'élément de compensation est constitué de deux rampes d'actionnement (25, 26) accouplées, qui coopèrent chacune avec un élément de rotor (23, 24), ainsi que d'un élément à ressort (33) intercalé.

4. Dispositif de changement de vitesse selon l'une des revendications précédentes, caractérisé en ce que l'élément de compensation (25, 26, 33) et les éléments de rotor (23, 24) sont montés sur un arbre de commutation (22) introduisant le mouvement de rotation.

5. Dispositif de changement de vitesse selon les revendications 3 et 4, caractérisé en ce que
- les rampes d'actionnement (26, 27) sont montées solidairement en rotation mais axialement déplaçables sur l'arbre de commutation (22) et
- les éléments de rotor (23, 24) sont montés axialement fixes sur l'arbre de commutation (22).

6. Dispositif de changement de vitesse selon l'une des revendications précédentes, caractérisé en ce qu'une rampe d'actionnement (25, 26) et un élément de rotor (23, 24) coopèrent par au moins une surface en coin (37).

7. Dispositif de changement de vitesse selon la revendication 6, caractérisé en ce que la surface en coin (37), au moins unique, coopère avec une surface en arc (39).
